# EUROPEAN PATENT SPECIFICATION

(11) **EP 1 338 381 B1**
(45) Date of publication and mention of the grant of the patent: **25.01.2006**
(21) Application number: 03003343.5
(22) Date of filing: 13.02.2003
(51) Int. Cl.: B23Q 16/00, B23Q 7/06, B27C 3/00, B27M 1/08, B23Q 3/18

(54) **Machine for machining panels of wood or similar**
Maschine zum Bearbeiten von Platten von Holz oder dergleichen
Machine à usiner des panneaux du bois ou matière similaire

(30) Priority: 15.02.2002 IT BO20020074
(43) Date of publication of application: 27.08.2003
(73) Proprietor: BIESSE S.p.A., 61100 Pesaro (IT)
(72) Inventor: Bernardi, Paolo, 47841 Cattolica (IT)
(74) Representative: Jorio, Paolo

(56) References cited:
- EP-A- 0 469 231
- DE-A- 2 027 191
- DE-A- 19 843 003
- GB-A- 880 186

## Description

The present invention relates to a machine for machining panels of wood or similar as per the preamble of claim 1. An example of such a device is disclosed by DE 19848003.

More specifically, the present invention relates to a drilling machine for drilling panels of wood or similar, to which the following description refers purely by way of a non-limiting example.

Known drilling machines normally comprise conveying means defining a supporting surface for at least one panel, and for feeding the panel along a given path and in a given direction; a work station located along said path; stop means for arresting the panel at the work station; and at least one push device for ensuring the panel is positioned correctly contacting the stop means.

The push device normally comprises an actuating cylinder located beneath the supporting surface, and having an output rod substantially parallel to said path, and a number of push members equally spaced along the output rod with a given spacing.

Each push member is movable, by the panel and in opposition to an elastic return device, from a raised position, in which the push member projects above the supporting surface, to a lowered position, in which the push member is located completely beneath the supporting surface.

When the panel comes into contact with the stop means, some of the push members are located in the lowered position beneath the panel, while the others are located in the raised position behind the panel; and, when the actuating cylinder is operated to move the output rod parallel to said direction, the panel is engaged at the rear by a push member in the raised position, and is positioned correctly contacting the stop means.

Known drilling machines of the type described above have serious drawbacks, both technical and economic, on account of the complex structure of the push device.

Moreover, since, for given panel lengths, the push member engaging the rear of the panel must travel a distance in said direction substantially equal to the spacing of the push members along the output rod, positioning the panel correctly contacting the stop means on known drilling machines of the above type takes a relatively long time.

GB 880,186 discloses a machine for machining panels of wood or similar which comprises a chain conveyor defining a supporting surface for at least one panel and able to feed the panel along a given path; a work station located along the path; stop means for arresting the panel at the work station; and a push member for engaging the panel at the rear to ensure the panel is positioned correctly contacting the stop means. The position of the push member along the path can be modified manually as a function of the length of the panel.

DE 198 43 003 discloses a machine for machining panels of wood or similar which comprises a conveyor defining a supporting surface for at least one panel and able to feed the panel along a given path; a work station located along the path; stop means for arresting the panel at the work station; and a push member for engaging the panel at the rear to ensure the panel is positioned correctly contacting the stop means. The position of the push member along the path is selectively controlled by a motor as a function of the length of the panel.

It is an object of the present invention to provide a machine for machining panels of wood or similar, designed to eliminate the aforementioned drawbacks.

According to the present invention, there is provided a machine for machining panels of wood or similar as recited in Claim 1.

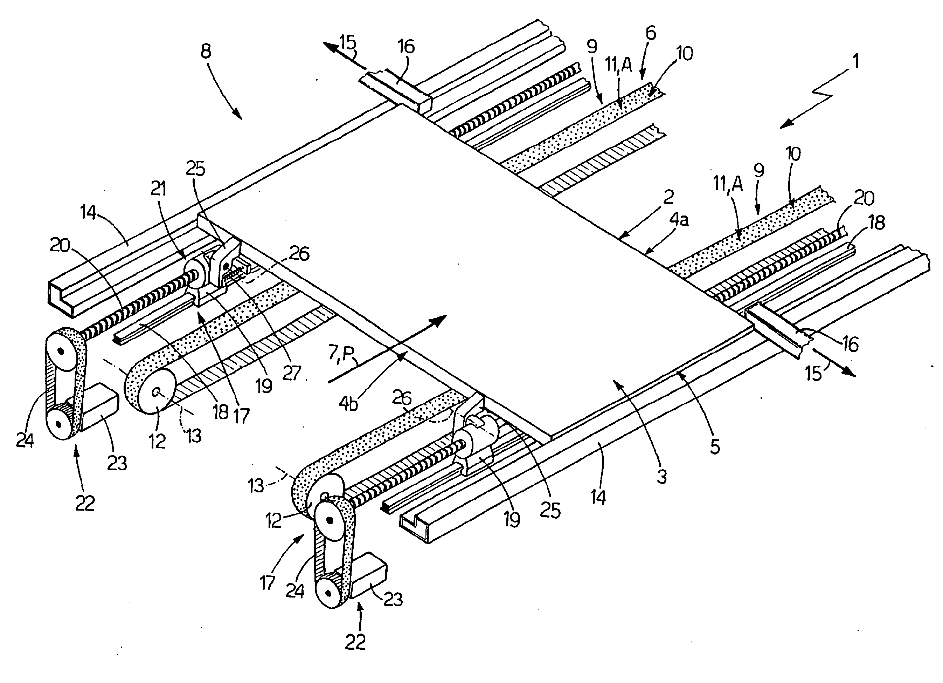

The present invention will be described by way of example with reference to the accompanying drawing showing a schematic view in perspective of a non-limiting embodiment.

Number 1 in the accompanying drawing indicates as a whole a drilling machine for machining flat panels 2 of wood or similar, each of which, in the example shown, is substantially parallelepiped-shaped with a substantially rectangular section, and is defined by two parallel major lateral faces 3, by two parallel minor lateral faces 4 perpendicular to faces 3, and by two parallel minor lateral faces 5 perpendicular to faces 3 and 4.

Machine 1 comprises a conveying device 6 for feeding panels 2 successively along a given path P and in a given direction 7; and a drilling station 8 located along path P and having a known operating unit (not shown) for drilling panels 2.

Device 6 comprises two endless conveyors 9 having respective belts 10, which are movable in respective vertical planes parallel to each other and to direction 7, and have respective top conveying branches 11 coplanar with each other to define a supporting surface A, on which panel 2 is placed "flat", i.e. with faces 3 parallel to surface A, and with one face 4 (hereinafter indicated 4a) at the front, and the other face 4 (hereinafter indicated 4b) at the rear in direction 7.

Each belt 10 is looped about two pulleys 12 (only one shown in the accompanying drawing), one of which is powered in time with a pulley 12 of the other conveyor 9, and which are mounted for rotation about respective longitudinal axes 13 substantially crosswise to direction 7.

At station 8, machine 1 has two substantially L-shaped guides 14, which extend parallel to each other and to direction 7, and are separated by a distance approximately equal to but not less than a width of panels 2 measured parallel to a direction 15 crosswise to direction 7, so as to receive in sliding manner a panel 2 fed by belts 10 in direction 7.

Conveyors 9 are provided with two stop members 16, which are located at station 8, extend parallel to direction 15, and are movable, with respect to guides 14 and in direction 15, between a work position (shown in the drawing) wherein members 16 extend inwards of path P, and a rest position (not shown) wherein members 16 are located outwards of path P.

Machine 1 also comprises two push devices 17 for ensuring panel 2 is positioned correctly contacting members 16, and which have respective guides 18 parallel to each other and to direction 7. Each guide 18 is fitted in sliding manner with a slide 19, which is also fitted to a screw 20 by a screw-nut screw coupling 21 of a relative actuating unit 22, a motor 23 of which rotates screw 20, via the interposition of a belt transmission 24, to move slide 19 linearly along guide 18 in direction 7.

Slide 19 has a push member 25, which is fitted to slide 19 to oscillate, with respect to slide 19, about an axis 26 parallel to direction 15, and is normally set by a spring 27 to a raised position wherein member 25 projects above supporting surface A. Spring 27 is calibrated to push member 25 into the raised position with less force than that applied to member 25 by a panel 2 traveling over member 25.

Motor 23 is an electric motor torque-controlled by an electronic central control unit (not shown), which is also connected to a known encoder (not shown) for selectively controlling the position of slide 19 and, therefore, of member 25 along path P.

In a variation not shown, machine 1 may comprise a single push device 17 and, therefore, a single push member 25 equidistant from guides 14. In a further variation not shown, the encoder (not shown) referred to above may be replaced by a different control device for selectively controlling the position of slide 19 and, therefore, of member 25 along path P.

Operation of machine 1 will now be described assuming only one panel 2 is fed along path P to drilling station 8, and as of the instant in which machine 1 is set up with the two stop members 16 in the work position, and with push members 25 moved along relative guides 18 so that the distance, measured parallel to direction 7, between each member 25 and relative member 16 is approximately equal to but no less than a length of panel 2 also measured parallel to direction 7. In this connection, it should be pointed out that machine 1 is set up when the previously drilled panel 2 has been removed from station 8, and before the next panel 2 is fed to station 8.

As it is fed along path P, the panel 2 considered engages members 25, which move into the lowered position; releases members 25, which therefore move into the raised position; and eventually contacts members 16 with face 4a. Upon panel 2 contacting members 16, conveyors 9 are deactivated; motors 23 are activated; and members 25 move in direction 7 to engage face 4b and position panel 2 correctly contacting members 16.

Once panel 2 is drilled, both members 16 are moved into the rest position; conveyors 9 are activated to remove panel 2 from station 8; and, since the position of panel 2 with respect to direction 7 may vary due to differing friction between panel 2 and each of belts 10 and/or due to vibration of panel 2 caused by the flexible structure of belts 10, members 25 are maintained contacting panel 2 for a given length of time, so that face 4b remains perpendicular to direction 7.

As will be clear from the foregoing description:
the structure of push devices 17 is relatively straightforward and economical;
the travel of push members 25 and, therefore, the time taken to position panel 2 correctly against stop members 16 are relatively short;
the encoders associated with motors 23 provide for determining any malfunctioning of push devices 17, as, for example, when push members 25 remain jammed in the lowered position when released by panel 2; in which case, push members 25, when activated, fail to engage the rear of panel 2, and so travel further than they should beneath panel 2 in direction 7;
once drilling is completed, push members 25 provide for accurately removing panel 2 from drilling station 8, and for maintaining face 4b perpendicular to direction 7.

## Claims

1. A machine for machining panels (2) of wood or similar, the machine comprising conveying means (6) defining a supporting surface (A) for at least one panel (2), and for feeding the panel (2) along a given path (P) and in a given direction (7); a work station (8) located along said path (P); stop means (16) for arresting the panel (2) at the work station (8); at least one push device (17) for engaging the panel (2) at the rear in said direction (7), to ensure the panel (2) is positioned correctly contacting said stop means (16), said push device (17) comprising a single push member (25) movable in said direction (7); and actuating means (22) for selectively controlling a position of the push member (25) along said path (P) as a function of a length of the panel (2) measured parallel to said direction (7); said actuating means (22) comprising a motor (23) for moving the push member (25) along said path (P) and an electronic central control unit for selectively controlling the motor (23) and the position of the push member (25) along said path (P); and being **characterized in that** said push member (25) is movable between a first position, wherein the push member (25) is located completely beneath said supporting surface (A), and a second position, wherein the push member (25) projects above the supporting surface (A).

2. A machine as claimed in Claim 1, wherein said actuating means (22) comprise a torque-controlled electric motor (23).

3. A machine as claimed in Claim 2, wherein said actuating means (22) also comprise a guide (18), a slide (19) mounted to slide along said guide (18), and a screw (20) rotated by said electric motor (23) and connected to said slide (19) by a screw-nut screw coupling (21); said push member (25) being carried by said slide (19).

4. A machine as claimed in any one of the foregoing Claims, wherein the push device (17) comprises elastic means (27) for normally maintaining the push member (25) in said second position; the push member (25) being moved from the second to the first position by said panel (2) and in opposition to said elastic means (27).

5. A machine as claimed in any one of the foregoing Claims, wherein said conveying means (6) comprise at least two conveying devices (9), each comprising at least one respective belt conveyor (10); a push device (17) being associated with each of the conveying devices (9).

6. A machine as claimed in any one of the foregoing Claims, wherein said stop means (16) comprise at least one stop member (16) movable, crosswise to said direction (7), between a work position, wherein the stop member (16) is located inwards of said path (P), and a rest position, wherein the stop member (16) is located outwards of the path (P).

## Patentansprüche

1. Maschine zum Bearbeiten von Holzplatten (2) oder dergleichen, wobei die Maschine umfasst eine Trägeroberfläche (A) definierende Transportmittel (6) für zumindest eine Platte (2) und zum Transport der Platte (2) entlang einer vorgegebenen Bahn (P) und in einer vorgegebenen Richtung (7); eine entlang der Bahn (P) angeordnete Arbeitsstation (8); Anhaltemittel (16) zum Anhalten der Platte (2) an der Arbeitsstation (8); zumindest eine Druckvorrichtung (17) zum Beaufschlagen der Platte (2) an der Rückseite in besagter Richtung (7), um sicherzustellen, dass die Platte (2) exakt in Kontakt mit den Anhalternitteln (16) positioniert ist, wobei die Druckvorrichtung (17) ein in der Richtung (7) bewegliches, separates Druckbauteil (25) aufweist; und Betätigungsmittel (22) zur gezielten Steuerung einer Position des Druckbauteils (25) entlang der Bahn (P) als Funktion einer parallel zur Richtung (7) gemessenen Länge der Platte (2); wobei die Betätigungsmittel (22) einen Motor (23) zum Bewegen des Druckbauteils (25) entlang der Bahn (P) und eine elektronische Zentral-Steuerungseinheit zur gezielten Steuerung des Motors (23) und der Position des Druckbauteils (25) entlang der Bahn (P) umfasst; und **dadurch gekennzeichnet, dass** das Druckbauteil (25) beweglich ist zwischen einer ersten Position, in der das Druckbauteil (25) vollständig unter der Trägeroberfläche (A) angeordnet ist, und einer zweiten Position, in welcher das Druckbauteil (25) über die Trägeroberfläche (A) vorsteht.

2. Maschine nach Anspruch 1, wobei die Betätigungsmittel (22) einen drehmomentgeregelten elektrischen Motor (23) umfassen.

3. Maschine nach Anspruch 2, wobei die Betätigungsmittel (22) außerdem eine Führung (18), einen zum Gleiten entlang der Führung (18) montierten Schlitten (19), und eine durch den elektrischen Motor (23) in Drehung versetzte und mit dem Schlitten (19) durch eine Schraube-Schraubenmutter-Verbindung (21) verbundene Spindel (20) umfasst; wobei das Druckbauteil (25) durch den Schlitten (19) getragen wird.

4. Maschine nach einem der vorherigen Ansprüche, wobei die Druckvorrichtung (17) elastische Mittel (27) zum gewöhnlichen Halten des Druckbauteils (25) in der zweiten Position umfasst; wobei das Druckbauteil (25) durch die Platte (2) und entgegen den elastischen Mitteln (27) von der zweiten in die erste Position (27) bewegt wird.

5. Maschine nach einem der vorherigen Ansprüche, wobei die Transportmittel (6) zumindest zwei Transportvorrichtungen (9) umfassen, wobei jede zumindest einen entsprechenden Bandförderer (10) umfasst; wobei eine Druckvorrichtung (17) jeder der Transportvorrichtungen (9) zugeordnet ist.

6. Maschine nach einem der vorherigen Ansprüche, wobei die Anhaltemittel (16) zumindest ein Anhaltebauteil (16) umfassen, das quer zu der Richtung (7) zwischen einer Bearbeitungsposition, in der das Anhaltebauteil (16) in die Bahn (P) gerichtet angeordnet ist, und einer Ruheposition, in der das Anhaltebauteil (16) aus der Bahn (P) gerichtet angeordnet ist, beweglich ist.

## Revendications

1. Machine à usiner des panneaux (2) de bois ou matière similaire, la machine comprenant des moyens de transport (6) formant une surface de support (A) destinée à au moins un panneau (2), et à acheminer le panneau (2) le long d'un trajet donné (P) et dans une direction donnée (7) ; un poste de travail (8) situé le long dudit trajet (P) ; des moyens d'arrêt (16) permettant d'arrêter le panneau (2) au niveau dudit poste de travail (8) ; au moins un dispositif de poussée (17) permettant d'engager le panneau (2) par l'arrière dans ladite direction (7) pour s'assurer que le panneau (2) est correctement positionné au contact desdits moyens d'arrêt (16), ledit dispositif de poussée (17) comprenant un seul élément de poussée (25) mobile dans ladite direction (7) ; et des moyens d'actionnement (22) permettant de commander de manière sélective une position de l'élément de poussée (25) le long dudit trajet (P) en fonction d'une longueur du panneau (2) mesurée parallèlement à ladite direction (7) ; lesdits moyens d'actionnement (22) comprenant un moteur (23) destiné à déplacer l'élément de poussée (25) le long dudit trajet (P) et un organe de commande centrale électronique destiné à commander de manière sélective le moteur (23) ainsi que la position de l'élément de poussée le long dudit trajet (P) ; et qui est **caractérisée en ce que** ledit élément de poussée (25) est mobile entre une première position dans laquelle l'élément de poussée (25) est situé complètement au dessous de ladite surface de support (A) et une deuxième position dans laquelle l'élément de poussée (25) fait saillie au dessus de la surface de support (A).

2. Machine selon la revendication 1, dans laquelle lesdits moyens d'actionnement (22) comprennent un moteur électrique à commande de couple (23).

3. Machine selon la revendication 2, dans laquelle lesdits moyens d'actionnement (22) comprennent également un guide (18), une coulisse (19) montée de manière à glisser le long dudit guide (18), et une vis (20) mise en rotation par ledit moteur électrique (23) et reliée à ladite coulisse (19) par un accouplement vis - écrou (21) ; ledit élément de poussée (25) étant porté par ladite coulisse (19).

4. Machine selon l'une quelconque des revendications précédentes, dans laquelle le dispositif de poussée (17) comprend des moyens élastiques (27) permettant de maintenir normalement l'élément de poussée (25) dans ladite deuxième position ; l'élément de poussée (25) étant transféré de la deuxième à la première position par ledit panneau (2) et en s'opposant aux dits moyens élastiques (27).

5. Machine selon l'une quelconque des revendications précédentes, dans laquelle lesdits moyens de transport (6) comprennent au moins deux dispositifs de transport (9), chacun d'eux comprenant au moins un transporteur à courroie respectif (10) ; un dispositif de poussée (17) étant associé à chacun des dispositifs de transport (9).

6. Machine selon l'une quelconque des revendications précédentes, dans laquelle lesdits moyens d'arrêt (16) comprennent au moins un élément d'arrêt (16) mobile, transversalement à ladite direction (7), entre une position de travail dans laquelle l'élément d'arrêt (16) est situé intérieurement audit trajet (P) et une position de repos dans laquelle l'élément d'arrêt (16) est situé extérieurement audit trajet (P).
